# EUROPÄISCHE PATENTSCHRIFT

(11) **EP 2 412 550 B1**
(45) Veröffentlichungstag und Bekanntmachung des Hinweises auf die Patenterteilung: **10.02.2016**
(21) Anmeldenummer: 11006116.5
(22) Anmeldetag: 26.07.2011
(51) Int. Cl.: B60D 1/54

(54) **Anhängekupplung**
Tow bar
Attelage

(30) Priorität: 31.07.2010 DE 102010032991; 23.03.2011 DE 102011014882
(43) Veröffentlichungstag der Anmeldung: 01.02.2012
(73) Patentinhaber: WESTFALIA - Automotive GmbH, 33378 Rheda-Wiedenbrück (DE)
(72) Erfinder: Bachmann, Horst, 44793 Bochum (DE); Becker, Wilfried, 33397 Rietberg (DE); Domke, Friedrich, 33442 Herzebrock-Clarholz (DE); Wyrwich, Martin, 33378 Rheda-Wiedenbrück (DE)
(74) Vertreter: Patentanwälte Bregenzer und Reule Partnerschaftsgesellschaft mbB

(56) Entgegenhaltungen:
- EP-A2- 1 275 533
- DE-A1- 10 243 045
- DE-A1- 10 347 817
- DE-A1- 19 651 562
- DE-A1-102007 029 051

## Beschreibung

Die Erfindung betrifft eine Anhängekupplung für ein Kraftfahrzeug, gemäß dem Oberbegriff des Anspruchs 1.

Eine derartige Anhängekupplung ist beispielsweise aus DE 102 43 045 A1 bekannt.

Eine Anhängekupplung für Kraftfahrzeuge, bei der federbelastete Stifte in einem Kugelstangenlagerkopf angeordnet sind, die im Zentrum einer Kalottenfläche austreten und in Richtung der radialen Durchgänge auf Kugeln einwirken, um unabhängig von etwaigen Reibungskräften der Kugeln in den radialen Durchgängen, beispielsweise durch eindringende Verschmutzung und in Folge von Korrosion stets eine einwandfrei Freigabe der Fomschlusskonturen zu gewährleisten.

Eine weitere Anhängekupplung ist beispielsweise aus EP 1 533 149 B1 bekannt. Fahrzeugseitig ist ein Fahrzeug-Lagerteil beispielsweise an einem Querträger des Kraftfahrzeuges, insbesondere einem Pkw, angeordnet, das einen Teil eines Lagers zum beweglichen Lagern des Kupplungsarmes bereitstellt. Dabei ist die Lageraufnahme das bewegliche Bauteil, das heißt das Kupplungsarm-Lagerteil, das wiederum auf dem Fahrzeug fest angeordneten Lagerelement mehrachsig schwenkbar, zudem auch axial verschieblich ist.

Da sich die Lageraufnahme auf dem Lagerelement der bekannten Anhängekupplung bewegen kann, fällt der Kupplungsarm, wenn eine Fixierung der Fixiereinrichtung aufgehoben wird, in eine untere, mittlere Stellung zwischen der Gebrauchsstellung und der Nichtgebrauchsstellung, so dass ein Nutzer den Kupplungsarm ergreifen und in eine der vorgenannten Endlagen verstellen kann. Dort greift dann wiederum die Fixiereinrichtung ein und fixiert das Lager, so dass der Kupplungsarm sowohl für den Fahrbetrieb ortsfest festgelegt ist, aber auch in der Ruhestellung fixiert ist.

Die Bereitstellung des Kupplungsarmes bei der bekannten Anhängekupplung funktioniert nicht in jedem Fall. Weiterhin ist eine komplizierte Führung des Kupplungsarmes mittels einer Kulissenanordnung erforderlich, bei der im Prinzip die Gefahr eines Verklemmens besteht.

Es ist daher die Aufgabe der vorliegenden Erfindung, eine mechanisch optimierte, insbesondere einfach zu handhabende, Anhängekupplung für ein Kraftfahrzeug bereitzustellen.

Zur Lösung der Aufgabe ist eine Anhängekupplung gemäß der technischen Lehre des Anspruchs 1 vorgesehen.

Die Lageraufnahme und das Lagerelement sind erfindungsgemäß relativ zueinander beispielsweise radial und/oder im Sinne eines Drehens durch die Stellfederanordnung beaufschlagt.

Das Lagerelement kann in oder auf der Lageraufnahme beweglich gelagert sein.

Die Formschlussflächen umfassen vorzugsweise konische, kugelige und kugelkalottenartige, zylindrische, sternförmige oder dergleichen Formschlussflächen. Die Formschlussflächen können auch zumindest abschnittsweise plan sein.

Die Stellfederanordnung kann verschiedene Zwecke verfolgen, beispielsweise zum Lösen des Formschlusses der Fixiereinrichtung beizutragen und/oder den Kupplungsarm in eine Bereitstellungsposition zu verstellen, die zwischen der Gebrauchsstellung und der Nichtgebrauchsstellung liegt. Dadurch steht der Kupplungsarm bequem zur Verfügung und kann vom Bediener gut ergriffen werden, um in die Gebrauchs- oder Nichtgebrauchsstellung verstellt zu werden.

Beispielsweise umfasst die Stellfederanordnung eine die Lageraufnahme und das Lagerelement relativ zueinander axial und/oder im Sinne eines Drehens beaufschlagende Stellfeder.

Die Lageraufnahme kann beispielsweise fahrzeugfest sein, während das Lagerelement um die Lageraufnahme herum beweglich gelagert ist, beispielsweise drehbeweglich und/oder schiebebeweglich. Es ist aber auch, wie in der Zeichnung noch deutlich wird, möglich, dass das Lagerelement fahrzeugfest ist, während die Lageraufnahme das Lagerelement aufnimmt und relativ zum Lagerelement beweglich gelagert ist.

Zwar kann das Lager im Prinzip ein Kugellager sein, das heißt beispielsweise, dass das Lagerelement einen Kugelkopf oder Teil-Kugelkopf umfasst, während die Lageraufnahme die Gelenkpfanne bildet. Bevorzugt ist jedoch das Lager kein Kugellager oder kein ausschließlich im Sinne eines Kugellagers lagerndes Lager. Das Lager umfasst beispielsweise ein Schiebelager und/oder ein Schwenklager. Ferner ist es zwar möglich, dass das Lagerelement und die Lageraufnahme relativ zueinander um mehrere Drehfreiheitsgrade gelagert sind, das heißt, dass eine zwei- und mehrachsige Schwenkbarkeit gegeben ist. Es ist aber auch möglich, dass das Lager ein einachsig schwenkendes Lager ist, das heißt, dass nur eine einzige Drehachse vorhanden ist. Selbstverständlich umfasst die Erfindung auch ein reines Schiebelager.

Die Stellfederanordnung umfasst vorteilhaft mindestens eine in einem Innenraum der Lageraufnahme angeordnete Stellfeder in einer bevorzugten Ausführungsform. Die Stellfeder ist quasi gekapselt, das heißt, sie befindet sich im Innenraum des Lagers, so dass sie vor Umwelteinflüssen geschützt ist. Zudem kann eine optimale Krafteinleitung erzielt werden. Die Stellfederanordnung kann also direkt auf die zu verstellenden Komponenten, nämlich die Lageraufnahme und das Lagerelement, wirken. Außenseitig sind keine vorstehenden oder beweglichen Teile, z.B. in Gestalt einer Feder, notwendig. Vielmehr ist die Stellfeder gekapselt im Innenraum angeordnet.

Die mindestens eine Stellfeder umfasst zweckmäßigerweise mindestens eine Gleitfläche, an der eine Führungskontur entlang gleiten kann. Die Führungskontur ist beispielsweise am Lagerelement oder der Lageraufnahme angeordnet. Bei einem Verstellen in die vorbestimmte Stellung oder aus dieser heraus gleitet die Führungskontur an der Gleitfläche entlang. Beispielsweise hat die Stellfeder eine Schrägfläche, an der die Führungskontur entlang gleiten kann. Es versteht sich, dass auch mehrere Gleitflächen oder Schrägflächen vorhanden sein können.

Die Stellfederanordnung umfasst - auch in Kombination mit der vorgenannten Ausführungsformen - eine Formschluss-Lösefeder oder mehrere solche Lösefedern, die einer Formschlussfläche zugeordnet sind. Die Formschluss-Lösefeder beaufschlagt die andere Formschlussfläche im Sinne eines Lösens des Formschlusses.

Nun wäre es zwar denkbar, dass die Formschluss-Lösefeder genau in der Kraftrichtung wirkt, die zur Herstellung des Formschlusses notwendig ist, beispielsweise in der Kraftrichtung, in der ein Stellelement auf die Formschlussfläche wirkt, um den Formschluss herzustellen. Bevorzugt ist jedoch eine winkelige Beaufschlagung einer oder beider Formschlussflächen bezogen auf eine Stellachse, in der eine oder beide der Formschlussflächen zur Herstellung des Formschlusses zu beaufschlagen sind. Beispielsweise beaufschlagt ein Stellelement der Fixiereinrichtung die Formschlussflächen aufeinander zu. Es kann aber auch vorgesehen sein, dass eine oder beide Formschlussflächen direkt am Fahrzeug-Lagerteil und/oder am Kupplungsarm-Lagerteil angeordnet sind, so dass bei Bewegen des einen Lagerteils zum andern Lagerteil hin die Formschlussflächen in Kontakt miteinander kommen.

An dieser Stelle sei bemerkt, dass selbstverständlich mehrere, insbesondere eine Vielzahl von Formschlussflächen, vorgesehen sind, um den Kupplungsarm relativ zum Kraftfahrzeug möglichst spielfrei zu fixieren. Die Formschluss-Lösefeder, die winkelig zur Stellachse wirkt, wobei sie dies direkt tun kann, aber auch über ein Übertragungselement, wirkt beispielsweise im Sinne eines Dralles beziehungsweise eines Drehmoments und/oder axial. Erfindungsgemäß ist es vorgesehen, dass die Formschluss-Lösefeder oder Lösefederanordnung (es könnten nämlich mehrere solche Lösefedern vorgesehen sein) nicht nur den Formschluss aufhebt, sondern auch eine Relativbewegung des Lagerelements und der Lageraufnahme einleitet. Somit kann also das Aufheben des Formschlusses direkt dazu genutzt werden, beispielsweise den Kupplungsarm in eine zwischen der Gebrauchsstellung und der Nichtgebrauchsstellung liegende Zwischenstellung zu beaufschlagen.

Die vorbestimmte Stellung ist nämlich vorzugsweise eine zwischen der Gebrauchsstellung und der Nichtgebrauchsstellung liegende Zwischenstellung, in der der Kupplungsarm von einem Bediener ergriffen werden kann. Der Kupplungsarm zeigt beispielsweise in dieser Stellung mit seinem freien Ende nach unten in Richtung Fahrbahn.

Die eine Formschlussfläche ist zweckmäßigerweise an der Lageraufnahme und die andere Formschlussfläche am Lagerelement fest oder beweglich angeordnet. Es ist aber auch möglich, dass die umgekehrte Konfiguration getroffen ist, das heißt, dass an der Lageraufnahme eine bewegliche Formschlussfläche, am Lagerelement eine feststehende Formschlussfläche vorgesehen ist. Die vorbestimmte Stellung ist bei beiden Varianten beispielsweise die Lösestellung der Fixiereinrichtung, in der das mindestens eine Paar zusammenwirkender Formschlussflächen der Fixiereinrichtung voneinander gelöst und entfernt ist.

An dieser Stelle sei bemerkt, dass selbstverständlich auch ein Formschluss außerhalb des Lagers hergestellt werden kann, beispielsweise durch einen Riegel, eine Klemmeinrichtung oder dergleichen.

Eine an sich eigenständige Erfindung stellt es dar, dass das Lagerelement einen Lagerkopf umfasst, der in einen Innenraum der Lageraufnahme eingreift, dort entlang mindestens einer Schiebeachse schiebebeweglich und um mindestens eine Drehachse, vorzugsweise zwei oder mehr Drehachsen, drehbeweglich gelagert ist. Die Schiebebewegung kann beispielsweise dazu genutzt werden, einen Formschluss aufzuheben, aber auch um beispielsweise eine Zwischenstellung zwischen der Gebrauchsstellung und der Nichtgebrauchsstellung einzunehmen.

Der Lagerkopf und die Lageraufnahme sind relativ zueinander durch eine Schiebebewegung zwischen einer Lösestellung und einer Fixierstellung der Fixiereinrichtung verstellbar gelagert, wobei in der Lösestellung Formschlusskonturen am Lagerkopf und der Lageraufnahme voneinander entfernt sind und der Lagerkopf und die Lageraufnahme um mindestens eine Drehachse, vorzugsweise mehrere Drehachsen, relativ zueinander drehbar sind. Dabei ist vorzugsweise vorgesehen, dass der Lagerkopf und die Lageraufnahme, wenn die Lösestellung erreicht ist, im Wesentlichen frei relativ zueinander beweglich sind, so dass ein Verklemmen der Bauteile nicht zu befürchten ist. Jedenfalls ist es zweckmäßig, wenn, anders als bei der eingangs genannten, bekannten Anhängekupplung, keine Kulissenführung vorhanden ist, die zu Verklemmungen neigt, sondern eine im Wesentlichen flächige Führung:

Am Lagerkopf und der Lageraufnahme ist zweckmäßigerweise eine Führungskontur angeordnet, beispielsweise eine stangenartige Führungskontur, die an einer Führungsfläche des jeweils anderen Bauteils anliegt und den Lagerkopf und die Lageraufnahme bei einer Relativbewegung führt. Beispielsweise ist die Führungsfläche eine sogenannte Regelfläche, das heißt eine Fläche, die durch eine Gerade aufgespannt wird. Die Führungskontur umfasst zweckmäßigerweise ein Rollenlager, das an der Führungsfläche entlang rollt.

Die Stellfederanordnung stützt sich zweckmäßigerweise an der mindestens einen Führungskontur ab. Beispielsweise handelt es sich bei der Stellfeder um eine in mehreren Richtungen winkelig gebogene Feder, die sich direkt an dem stangenartigen Führungsbauteil abstützen kann. Dabei kann die Führungskontur auch dazu vorgesehen sein, an einer Gleitfläche der Stellfeder entlang zugleiten, was das Verstellen des Lagerelements und der Lageraufnahme relativ zueinander in Richtung der vorbestimmten Stellung unterstützt.

Die mindestens eine Führungskontur kann aber auch eine Formschlusskontur bilden, die durch eine Relativbewegung des Lagerkopfs und der Lageraufnahme mit einer Gegen-Formschlusskontur am jeweils anderen Bauteil in oder außer Formschluss-Eingriff bringbar ist. Somit kann also die Führungskontur nicht nur die Aufgabe der Führung an der Führungsfläche erfüllen, sondern auch zugleich einen Formschluss herstellen. Beispielsweise wird durch axiales Relatiwerstellen der Lageraufnahme zum Lagerelement der Formschluss zwischen der Formschlusskontur und der Gegen-Formschlusskontur bewirkt.

Ein vom Lagerkopf abstehender Vorsprung durchdringt zweckmäßigerweise eine Durchtrittsöffnung der Lageraufnahme und steht so vor die Lageraufnahme vor. An der Durchtrittsöffnung, beispielsweise stirnseitig und/oder innenseitig oder und/oder an einem Innenumfang, befindet sich eine Führungsfläche, die ebenfalls eine Führungskontur darstellt, um den Vorsprung an der Durchtrittsöffnung zu führen.

Zweckmäßigerweise ist zudem vorgesehen, dass an einer dem Vorsprung entgegengesetzten Stirnseite des Lagerkopfs die Regelfläche vorhanden ist, die an einer an der Lageraufnahme befindlichen Führungskontur geführt ist, beispielsweise einer Querstange, einem Querbolzen oder einer Rolle.

Die Fixiereinrichtung umfasst zweckmäßigerweise ein Stellelement, beispielsweise einen axial verschieblichen Bolzen, ein drehbares Stellelement oder dergleichen, das in der Fixierstellung der Fixiereinrichtung mindestens ein Formschlusselement, das seinerseits wiederum eine der Formschlussflächen aufweist, in Richtung der anderen Formschlussfläche beaufschlagt. Das Formschlusselement und das Stellelement sind beispielsweise an der Lageraufnahme oder dem Lagerelement beweglich gelagert. Dort befindet sich zum Beispiel eine Führung für das Stellelement und eine Führung, insbesondere ein Führungskanal, für das Formschlusselement. Das Formschlusselement ist beispielsweise ein Bolzen, ein Formstück, eine Rolle oder dergleichen.

Insbesondere bei einer solchen Fixiereinrichtung ist es zweckmäßig, wenn zwischen dem Stellelement und dem mindestens einen Formschlusselement mindestens ein Ausgleichselement angeordnet ist, wobei das mindestens eine Formschlusselement und das mindestens eine Ausgleichselement in einem Führungkanal entlang einer Längsachse des Führungskanals geführt sind. Das Ausgleichselement ist zweckmäßigerweise quer zu der Längsachse und/oder entlang der Längsachse elastisch verformbar. Dadurch ist ein Spielausgleich realisiert, das heißt, das Ausgleichselement gleicht ein Spiel aus, das das Formschlusselement zur Beweglichkeit in dem Führungskanal aufweisen sollte.

An dieser Stelle sei bemerkt, dass das vorbeschriebene Ausgleichselement, aber auch die oben erläuterte(n) schräg wirkende Formschluss-Lösefeder(n), die auf eine am andern Bauteil fest oder beweglich angeordnete Formschlussfläche wirkt, nicht nur bei Anhängekupplungen zweckmäßig ist, bei denen gemäß dem Oberbegriff des Anspruches 1 der Kupplungsarm mittels eines Lagers beweglich zwischen einer Nichtgebrauchsstellung und einer Gebrauchsstellung gelagert ist, jedoch stets am Kraftfahrzeug verbleibt, sondern auch bei solchen Anhängekupplungen, wo eine Fixiereinrichtung dieser Art dazu verwendet wird, einen Kupplungsarm zu verriegeln und zu fixieren, der von einer fahrzeugseitigen Halterung entfernbar ist. Die Lageraufnahme ist dann beispielsweise eine fahrzeugseitige Steckaufnahme ist, während das Lagerelement das Steckende des Kupplungsarms oder eine dort angeordnete Steckkontur ist. Auch die nachfolgenden Ausführungen, die bei der Fixiereinrichtung, insbesondere deren Ausgleichselement (en) zweckmäßig sind, können nicht nur bei Anhängekupplungen mit Schwenk- und/oder Schiebelagern, sondern auch bei Stecksystemen (steckbarer Kupplungsarm) verwendet werden.

Zweckmäßigerweise hat das Ausgleichselement an seinen Stirnseiten bezüglich der Längsachse jeweils eine Aufnahme, beispielsweise eine kalottenartige oder konische Aufnahme. In der einen Aufnahme ist das Formschlusselement, in der anderen Aufnahme beispielsweise das Stellelement oder ein zwischen dem Ausgleichselement und dem Stellelement angeordneter Zwischenkörper aufgenommen.

Bei dem Zwischenkörper handelt es sich beispielsweise um eine Kugel, eine Rolle oder auch um ein sonstiges Formstück. Jedenfalls ist es vorteilhaft, wenn der Zwischenkörper nicht elastisch ist. Diese Konfiguration hat den Vorteil, dass das Stellelement quasi auf einen harten Zwischenkörper wirkt, der Spielausgleich durch das Ausgleichselement bewirkt wird, dieses jedoch seinerseits wiederum auf ein ebenfalls vergleichsweise hartes, jedenfalls im Wesentlichen nicht-elastisches Formschlusselement wirkt. Das "weiche" Bauteil, nämlich das Zwischenelement des Ausgleichselements, ist zwischen dem Zwischenkörper und dem Formschlusselement, jedenfalls zwischen dem Formschlusselement und dem Stellelement angeordnet. Das Ausgleichselement weist, insbesondere zwischen den Aufnahmen, vorteilhaft eine Durchtrittsöffnung auf, durch die das Stellelement oder der Zwischenkörper das mindestens eine Formschlusselement direkt beaufschlagen

Nun wäre es zwar möglich, dass das Ausgleichselement aus einem elastischen Material, beispielsweise Kunststoff, besteht, das sich bei Kraftbeaufschlagung elastisch verformt, dann jedoch wieder seine Ausgangsform einnimmt. Beispielsweise hat das Ausgleichselement Schlitze, die ein Verformen ermöglichen. Eine bevorzugte Ausführungsform sieht vor, dass das Ausgleichselement mindestens zwei Ringsegmente umfasst, die durch einen Federring an ihrem radialen Außenumfang federnd gehalten sind. Der Federring sorgt zuverlässig dafür, dass sich die Ringsegmente in ihre unbelastete, ein Spiel zulassende Stellung zurückverformen. Wird das Ausgleichselement jedoch druckbelastet, wenn der Formschluss hergestellt wird, dehnt es sich aus und gleicht das Spiel im Führungskanal und/oder das Spiel zwischen der Gegen-Formschlussfläche und dem Stellelement aus.

Eine an sich eigenständige Erfindung, bei der es auf die Fixiereinrichtung zum Fixieren des Kupplungsarms in der Gebrauchsstellung und/oder der Nichtgebrauchsstellung nicht ankommt, diese also nicht vorhanden oder auch anders realisiert sein kann, stellt es dar, wenn die Anhängekupplung zum Antreiben des Kupplungsarm-Lagerteils einen Antrieb aufweist, insbesondere einen Antrieb mit mindestens einem flexiblen Zugorgan, einen Seilzugantrieb, einen Reibradantrieb oder dergleichen. Das Kupplungsarm-Lagerteil ist mit dem mindestens einen Zugorgan verbunden ist und um eine Drehachse drehbar und längs und/oder quer zu der Drehachse beweglich, insbesondere schwenkbar. Das flexible Zugorgan oder auch ein Reibradantrieb machen die Bewegungen des Lagerteils mit.

Nachfolgend wird ein Ausführungsbeispiel der Erfindung anhand der Zeichnung erläutert. Es zeigen:
- Fig. 1a: eine Anhängekupplung in perspektivischer Schrägansicht in Gebrauchsstellung,
- Fig. 1b: die Anhängekupplung gemäß Figur 1a mit ihrem Kupplungsarm in Zwischenstellung,
- Fig. 1c: die Anhängekupplung gemäß den vorgenannten Figuren, jedoch in Nichtgebrauchsstellung,

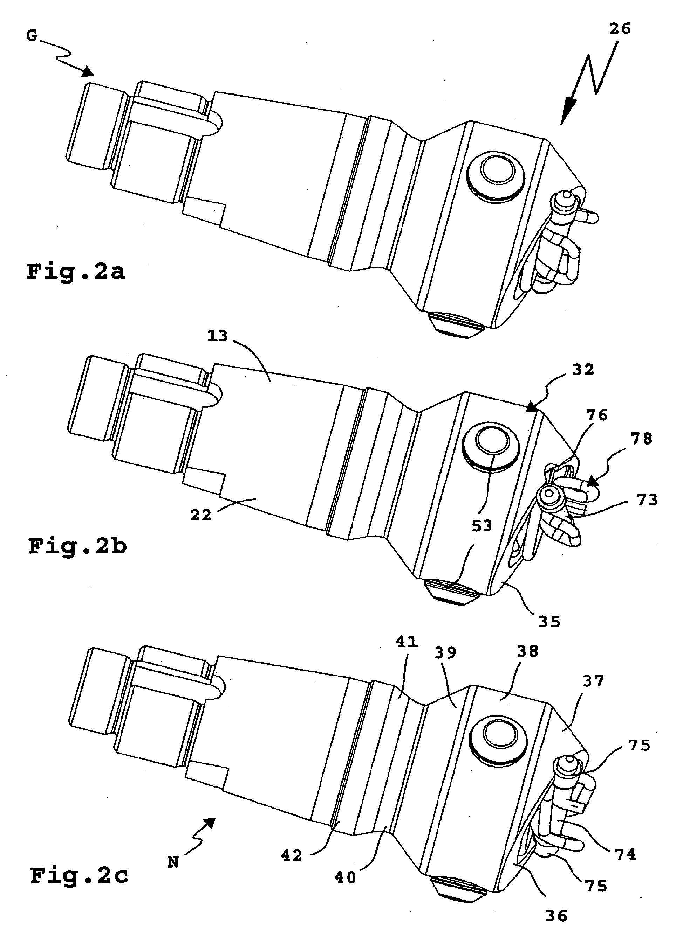

- Fig.2a-2c: ein Lagerelement der Anhängekupplung gemäß Figuren 1a-1c,
- Fig.3a-3c: Querschnittsansichten der Anhängekupplung gemäß Figuren 1a-1c z.B. entlang einer Schnittlinie A-A in den Figur 1a,

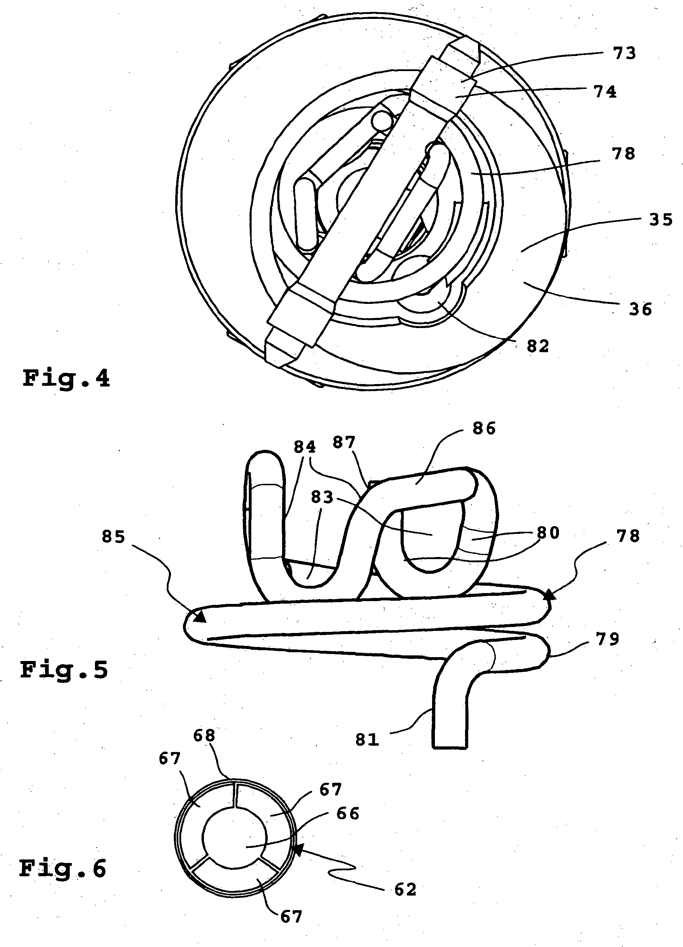

- Fig. 4: eine stirnseitige Frontalansicht auf das Lagerelement gemäß Figur 2a,
- Fig. 5: eine Stellfeder der Anhängekupplung gemäß den vorgenannten Figuren,
- Fig. 6: ein Ausgleichselement einer Fixiereinrichtung der Anhängekupplung gemäß den vorgenannten Figuren und
- Fig. 7: eine schematische Querschnittsansicht einer Auslösesperre der Anhängekupplung gemäß den vorgenannten Figuren, etwa entlang einer Linie B-B in Figur 3a.

In der Zeichnung ist eine Anhängekupplung mit einem "Schwenk-Schiebesystem" dargestellt, das heißt eine Anhängekupplung, bei der das Lagerelement und die Lageraufnahme axial verschieblich, zudem auch mehrachsig, mindestens jedoch einachsig, schwenkbar sind. Die vorher allgemein und nachfolgend im Detail beschriebenen Lösungen der Anhängekupplungen sind jedoch nicht nur bei solchen Systemen realisierbar, sondern auch beispielsweise bei einer rein kugelgelenkigen Lagerung, einer Schiebelagerung, teilweise auch bei Stecksystemen, zum Beispiel in Bezug auf die Fixiereinrichtung, oder auch bei Systemen, bei denen nur ein Drehfreiheitsgrad und eine Schiebeachse vorhanden sind, wobei die Schiebeachse und die Drehachse zweckmäßigerweise identisch sind, aber auch verschiedene Achsen sein können.

Die in der Zeichnung dargestellte Anhängekupplung 10 ist an einem schematisch dargestellten Kraftfahrzeug 11 befestigbar. Ein Lager 12 der Anhängekupplung 10 umfasst ein fahrzeugfest anordenbares Fahrzeug-Lagerteil 13 sowie ein Kupplungsarm-Lagerteil 14, das relativ zum Fahrzeug-Lagerteil 13 beweglich ist. Von dem Kupplungsarm-Lagerteil 14 steht ein Kupplungsarm 15 ab, der an seinem freien Ende ein Kupplungselement 16, beispielsweise eine Kupplungskugel, aufweist. Der Kupplungsarm 15 ist zweifach gebogen, was auch als "gekröpft" bezeichnet werden kann, und umfasst zwei Krümmungsabschnitte 17, 18, zwischen denen ein im Wesentlichen geradlinig verlaufender Zwischenabschnitt 19 angeordnet ist. Unmittelbar am Kupplungsarm 15 ist eine Steckdose befestigbar, wofür Halterungen 20 vorgesehen sind.

Das Fahrzeug-Lagerteil 13 ist beispielsweise an einem Querträger 21 oder an einem sonstigen fahrzeugfesten Bauteil des Kraftfahrzeuges 11 befestigbar, beispielsweise mit Hilfe eines nicht dargestellten Montageflansches oder dergleichen. Beispielsweise hat ein Vorsprung 22 des Fahrzeug-Lagerteils 13 Abflachungen 23 und/oder sonstige Montageausnehmungen oder Vorsprünge, die zur verdrehgesicherten, jedenfalls festen Montage am Kraftfahrzeug 11 vorgesehen sind.

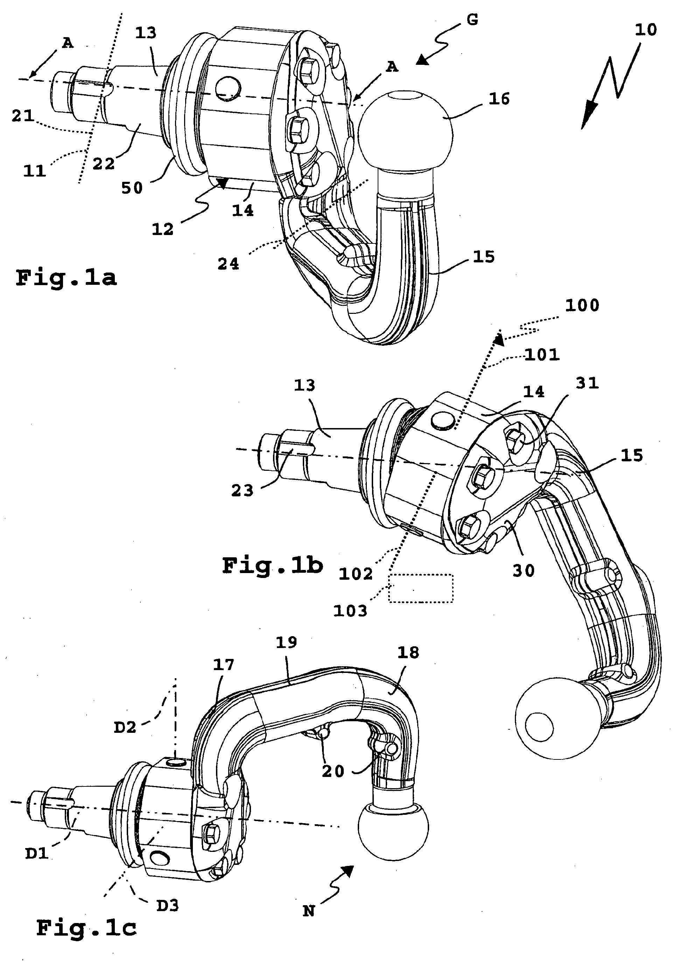

In der in Figur 1a dargestellten Gebrauchsstellung G steht der Kupplungsarm 15 nach hinten vor das Kraftfahrzeug 11 vor. Mithin ist also das Kupplungselement 16 in Fahrtrichtung hinten vor einem Stoßfänger 24 des Kraftfahrzeuges positioniert, so dass ein Fahrbetrieb möglich ist, ein Anhänger also an das Kupplungselement 16 angehängt werden kann.

In Figur 1c hingegen ist der Kupplungsarm 15 in seiner Nichtgebrauchsstellung N. Dann befindet er sich im Wesentlichen hinter dem Stoßfänger 24, so dass er beim Fahrbetrieb nicht stört, optisch aber zudem auch nicht auffällt. Der Kupplungsarm 15 hat sozusagen eine Überkopflage, das heißt, das Kupplungselement 16 ist näher beim Untergrund als der Zwischenabschnitt 19 des Kupplungsarms 15. In der Gebrauchsstellung G ist dies genau umgekehrt.

Mit Hilfe des Lagers 12 ist es möglich, den Kupplungsarm 15 zwischen der Gebrauchsstellung G und der Nichtgebrauchsstellung N zu verstellen, wobei in Figur 1b eine Zwischenposition gezeigt ist. Der Kupplungsarm 15 schwenkt also unter anderem um eine Drehachse D1 aus der Nichtgebrauchsstellung N nach unten, so dass er unter dem Stoßfänger 24 hervortauchen kann, um schließlich seine Gebrauchsstellung G einzunehmen, bei der der Zwischenabschnitt 19 näher beim Untergrund beziehungsweise der Fahrbahn ist als das Kupplungselement 16. Bei dem Lager 12 sind einige nachfolgend im Detail beschriebene, vorteilhafte Maßnahmen realisiert:

Das Kupplungsarm-Lagerteil 14 hat eine Lageraufnahme 25, die ein Lagerelement 26 des Fahrzeug-Lagerteils 13 aufnimmt, so dass das Lagerelement 26 innerhalb der Lageraufnahme 25 beweglich gelagert ist, vorliegend axial verschieblich und mehrachsig drehbar, was nachfolgend noch deutlich wird.

Die Lageraufnahme 25 ist an einem Lagerkörper 27 vorgesehen. Der Lagerkörper 27 bildet z.B. eine Art Deckels oder eine Gelenkpfanne und hat einen Ringabschnitt 28, der stirnseitig durch eine Deckwand 29 abgedeckt ist. An der vom Fahrzeug-Lagerteil 13 abgewandten Stirnseite des Lagerkörpers 27, etwa die Deckwand 29 überdeckend, ist ein Montageflansch 30 befestigt, der am fahrzeugseitigen Ende des Kupplungsarms 15 angeordnet ist. Vorzugsweise ist der Montageflansch 30 einstückig mit dem Kupplungsarm 15. Der Montageflansch 30 könnte zwar im Prinzip an den Lagerkörper 27 angeschweißt sein, mit diesem auch einteilig sein, ist vorliegend jedoch mittels Schrauben 31 angeschraubt. Der Montageflansch 30 bildet quasi einen Deckel für den Lagerkörper 27.

Das Lagerelement 26 umfasst einen Lagerkopf 32, der in die Lageraufnahme 25 eingreift, also in deren Innenraum 33 angeordnet ist. Der Innenraum 33 wird zum einen durch den Lagerkörper 27 begrenzt, zum andern durch einen Deckel 34, der fest mit dem Lagerkörper 27 verbunden ist, beispielsweise an diesen angeschraubt, mit diesem verschweißt oder verklebt.

Zwar wäre es nun prinzipiell möglich, dass die Lageraufnahme 25 eine kugelige Gestalt hat (Hohlkugel), während der Lagerkopf 32 korrespondierend dazu kugelig ist, so dass die Lagerflächen aneinandergleiten können und ein Kugellager bilden.

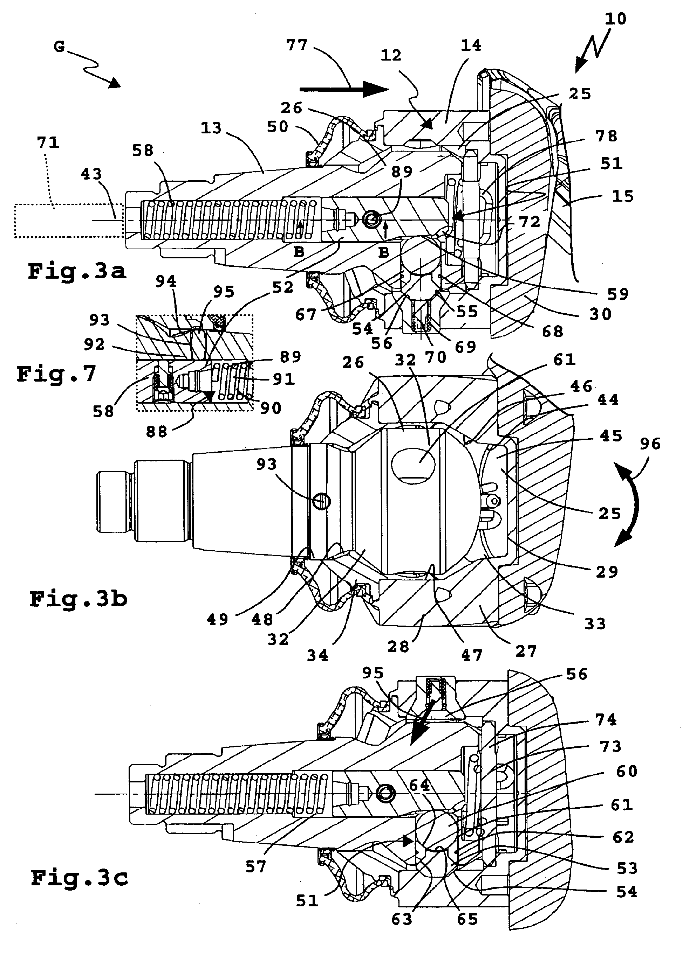

Bei einem Kugellager ist dann ein mehrachsiges Schwenken um die Drehachse D1 und weitere Drehfreiheitsgrade, z.B. weitere Drehachsen D2 und/oder D3 möglich. Beim Ausführungsbeispiel ist jedoch eine andere Konfiguration getroffen, bei der zwischen den innenseitigen Flächen der Lageraufnahme 25, die man im weiteren Sinne als Lagerflächen bezeichnen kann, und den Umfangsflächen des Lagerkopfes 32 ein Spiel vorhanden ist, was insbesondere in Figur 3b deutlich wird.

Zweckmäßigerweise ist das Kupplungsarm-Lagerteil 14 bezüglich des Fahrzeug-Lagerteils 13 um mindestens eine, vorteilhaft mehrere Drehachsen D1 und/oder D2 und/oder D3 drehbar, zweckmäßigerweise auch um mindestens eine Achse verschieblich, z.B. die Drehachse D1. Die Drehachsen D1 und/oder D2 und/oder D3 können raumfest oder nicht raumfest sein. Diese Bewegungsfreiheitsgrade sind vorteilhaft über den gesamten Stellweg des Kupplungsarm-Lagerteils 14 zwischen der Gebrauchsstellung G und der Nichtgebrauchsstellung N vorhanden. Es ist auch möglich, dass über einen Teil des Stellwegs, einer oder mehrere Bewegungsfreiheitsgrade nicht vorhanden sind.

Der Lagerköpf 32 hat an seiner Deckwand 29 eine Führungsfläche 36 sowie an seinem Außenumfang quasi äquatorial eine Umfangsfläche 38, die zwischen zwei Schrägflächen 37, 39 angeordnet ist. Die Umfangsfläche 38 ist vorliegend zylindrisch, könnte aber auch ausgerundet oder kugelig sein. Die Schrägflächen 37, 39 könnten ebenfalls ausgerundet beziehungsweise kugelig sein, sind vorliegend jedoch konisch. An die von der Stirnseite 35 entferntere Schrägfläche 39 schließt sich ein Bund 40 an, quasi eine Taillierung, an der ausgehend wiederum eine im Wesentlichen konische Führungsfläche 41 vorgesehen ist. Die Führungsfläche 41 geht dann in eine zylindrische Umfangsfläche 42 über, von der dann wiederum der Vorsprung 22 absteht. Der Vorsprung 22 ist vorteilhaft kegelig ausgestaltet, das heißt, er verjüngt sich zu seinem freien Ende hin, wobei dies nicht wesentlich ist.

Die vorgenannten Flächen 36-39, 41, 42 sind entlang einer Längsachse 43 des Lagerelements 26 hintereinander oder nebeneinander angeordnet.

In dieser Reihenfolge werden nachfolgend auch mehrere Abschnitte der Lageraufnahme 25 erläutert.

Ausgehend von der Deckwand 29 ist eine Umfangswand 44 vorgesehen, die zusammen mit der Deckwand 29 einen Aufnahmeraum 45 oder einen Freiraum begrenzt. An die Umfangswand 44 schließt sich eine Umfangswand 47 an, die korrespondierend mit der Umfangswand 44 des Lagerkopfes 32 etwa eine Innenwand eines Zylindermantels darstellt, also zylindrisch ist. An die Umfangswand 47 schließt sich eine Führungswand 48 an, die an der Innenseite des Deckels 34 angeordnet ist. Die Führungswand 48 ist zwar im Wesentlichen konisch, hat aber auch Abschnitte mit unterschiedlichen Steigungen, um zusammenwirkend mit der Führungsfläche 41 den Lagerkopf 32 relativ zur Lageraufnahme 25 zu führen, so dass die Bewegung zwischen der Gebrauchsstellung G und der Nichtgebrauchsstellung N geführt und gesteuert ist, wenn auch vergleichsweise lose, was nachfolgend noch deutlich wird. Die Führungswand 48 erstreckt sich von einer Durchtrittsöffnung 49 des Deckels 34 weg, durch die der Vorsprung 22 aus der Lageraufnahme 25 nach außen vorsteht.

Die Führungswand 48 ist in der Gebrauchsstellung G und der Nichtgebrauchsstellung N nicht in Kontakt mit der korrespondierenden Fläche am Lagerelement 26, nämlich der Führungsfläche 41, so dass dort beispielsweise ein Einsatzelement aus Kunststoff verwendet werden könnte, das optimale Gleiteigenschaften aufweist. Dieses Gleitelement könnte auch lippenartig, zumindest an seinem Übergangsbereich beziehungsweise seinem Kontaktbereich mit dem Lagerelement 26 ausgestaltet sein, um so einen Eintritt von Verschmutzung in den Innenraum 33 zu verhindern oder zu begrenzen.

Bei der Anhängekupplung 10 ist der Schmutzeintritt in den Innenraum beziehungsweise in das Lager 12 durch einen Balg 50 verhindert, der beispielsweise mittels Spannringen, Kabelbindern oder sonstigen Maßnahmen einerseits am Lagerelement 26, andererseits am Kupplungsarm-Lagerteil 14 festgelegt ist, beispielsweise am Deckel 34.

Der Kupplungsarm 15 ist mittels einer Fixiereinrichtung 51 in der Gebrauchsstellung G und der Nichtgebrauchsstellung N formschlüssig festlegbar. Die Fixiereinrichtung 51 umfasst ein Stellelement 52, das das Formschlusselemente 53 betätigt, wobei die Formschlusselemente 53 mit ihren Formschlussflächen 54 formschlüssig an Formschlussflächen 55 von Formschlussaufnahmen 56 anliegen, wenn die Fixiereinrichtung 51 in ihrer Formschlussstellung ist, siehe Figuren 3a, 3c. Die Formschlussflächen 54, 55 sind konisch, wobei die Anordnung so getroffen ist, dass die Formschlussflächen 54 einen Außenkonus, die Formschlussflächen 55 jeweils einen Innenkonus definieren. Es ist aber unter anderem auch möglich, z.B. kugelige und/oder zylindrische Formschlussflächen vorzusehen. Zwar würde ein Formschlusselement 53 ausreichen, beim Ausführungsbeispiel sind jedoch drei Formschlusselemente 53 und korrespondierende Formschlussaufnahmen 56 vorgesehen.

Das Stellelement 52 ist in einem Stellelement-Führungskanal 57 axial verschieblich gelagert. Eine Feder 58, die sich einerseits am Stellelement 52, andererseits am Lagerelement 26, beispielsweise dem Boden des Führungskanals 57, abstützt, belastet das Stellelement 52 in seine Fixierstellung. In dieser Fixierstellung verdrängt das Stellelement 52, das eine bolzenartige Gestalt hat, somit auch als Sperrbolzen bezeichnet werden könnte, die Formschlusselemente 53 in Richtung der Fixierstellung. Die Formschlusselemente 53 sind in Führungskanälen 61 geführt, die sich zwischen dem Stellelement-Führungskanal 57 und einem Außenumfang des Lagerelements 26, hier des Lagerkopfes 32 (eine andere Stelle könnte auch möglich sein), erstrecken. Die Führungskanäle 61 münden bei der Anhängekupplung 10 an der Umfangsfläche 38 aus, wo ihnen in der Gebrauchsstellung G und der Nichtgebrauchsstellung N jeweils die Formschlussaufnahmen 56 gegenüberliegen.

Allerdings beaufschlagt das Stellelement 52 mit seiner Stellschräge 59 die Formschlusselemente 53 nicht direkt, sondern über Zwischenkörper 60. Zwischen den Zwischenkörpern 60 und den Formschlusselementen 53 sind die Ausgleichselemente 62 angeordnet.

Nun könnte die Anordnung im Prinzip so getroffen sein, dass die Ausgleichselemente 62 quasi eine Zwischenlage zwischen dem Zwischenkörper 60 und dem Formschlusselement 53 bilden, diese also nicht direkt miteinander in Kontakt sind. Beim Ausführungsbeispiel ist jedoch vorgesehen, dass die Zwischenkörper 60 direkt auf die Formschlusselemente 53 wirken, jedoch ein Spielausgleich innerhalb der Führungskanäle 61 durch die Ausgleichselemente 62 möglich ist. Die Ausgleichselemente 62 haben nämlich stirnseitig jeweils Aufnahmen 63, 64 zur Aufnahme der Formschlusselemente 53 beziehungsweise der Zwischenkörper 60. Die beiden Aufnahmen 63, 64 sind beispielsweise kalottenartig oder konisch, abhängig von der korrespondierenden Kontur der Formschlusselemente 53 und der Zwischenkörper 60. Bei den Formschlusselementen 53 handelt es sich hingegen um Formstücke, die jedoch an ihrer der Aufnahme 63 zugewandten Seite einen Konus umfassen.

Ein Abschnitt der Formschlusselemente 53 durchdringt eine Durchtrittsöffnung 66 der Ausgleichselemente 62, so dass die Formschlusselemente 53 und die Zwischenkörper 60 direkten Kontakt haben. Die Zwischenkörper 60 liegen an einer Anlagefläche 65 der Formschlusselemente 53 direkt an Die Anlagefläche 65 ist beispielsweise kalottenartig. Somit ist eine direkte Kraftbeaufschlagung vom Stellelement 52 auf die Formschlusselemente 53 möglich, ohne dass die Elastizität der Ausgleichselemente 62 ein gewisses Spiel verursachen würde. An dieser Stelle sei bemerkt, dass die entsprechende Vorgehensweise nicht nur bei schwenkbar gelagerten Anhängekupplungen möglich ist, sondern dass Ausgleichselemente in der Art der Ausgleichselemente 62 auch bei Fixiereinrichtungen zum Einsatz kommen können, die beispielsweise zur Verriegelung und formschlüssigen Fixierung von an fahrzeugseitigen Steckaufnahmen ansteckbaren Kupplungsarmen möglich sind.

Die Ausgleichselemente 62 sorgen für einen Spielausgleich innerhalb der Führungskanäle 61. Die Ausgleichselemente 62 umfassen Ringsegmente 67, die durch einen Federring 68 an ihrem radialen Außenumfang federnd nach radial innen, das heißt in Kontakt zueinander, beaufschlagt sind. Allerdings können die Ringsegmente 67 entgegen der Kraft des Federrings 68 bei Kraftbeaufschlagung durch die Zwischenkörper 60 beziehungsweise die Formschlusselemente 53 nach radial außen ausweichen und dafür sorgen, dass die vorgenannten Komponenten spielfrei in den Führungskanälen 61 aufgenommen sind. Die Federringe 68 sorgen allerdings dafür, dass eine optimale Rückstellung erfolgt, das heißt, dass dann, wenn die Kraftbeaufschlagung durch das Stellelement 52 wegfällt, die Ausgleichselemente 62 nachgeben, das heißt sich nach radial innen verstellen, so dass ein Verstellspiel der Formschlusselemente 53 und ein Bewegungsspiel der Zwischenkörper 60 möglich ist.

Der Federring 68 ist vorteilhaft in einer Umfangsnut der Ringsegmente 67 aufgenommen und/oder in sonstiger Weise quer zu seiner Federkraftrichtung an den Ringsegmenten 67 festgelegt.

Im Bereich der Formschlussaufnahmen 56 sind Formschluss-Lösefedern 69 angeordnet, die im Sinne eines Aufhebens des Formschlusses zwischen den Formschlussflächen 54, 55 wirken. Allerdings wirken die Formschluss-Lösefedern 69 nicht direkt auf die auszuwerfende beziehungsweise abzustoßende Formschlussfläche 54, sondern über einen Auswerfer 70. Die Lösefedern 69 sind beispielsweise in buchsenartigen Aufnahmen an den Formschlussaufnahmen 56 aufgenommen, in deren Innenraum dann auch die Auswerfer 70 angeordnet sind.

### Das Lösen der Fixiereinrichtung 51 verläuft folgendermaßen:

Mit Hilfe einer manuellen oder motorischen Betätigungseinrichtung 71, beispielsweise einem Bowdenzug oder einem sonstigen Zugorgan, wird das Stellelement 52 in Richtung seiner Lösestellung (in der Zeichnung nach links) entgegen der Kraft der Feder 58 beaufschlagt. Dann gelangt ein Freigabebereich 72 am vorderen, freien Ende des Stellelements 52 in den Bereich der Führungskanäle 61, so dass die Zwischenkörper 60 sich in Richtung des Stellelement-Führungskanals 57 bewegen können, unterstützt zweckmäßigerweise durch die Lösefedern 69. Die Auswerfer 70 schieben sozusagen die Formschlusselemente 53 in Richtung des Lagerelements 26, so dass dieses vom Förmschluss freikommt und bewegbar ist. Hierbei können umfangreiche Bewefungsfreiheitsgrade genutzt werden, wie nachfolgend noch deutlich wird:

Dadurch, dass zwischen den einzelnen Lagerflächen beziehungsweise Umfangsflächen einerseits des Lagerkopfes 32 und andererseits der Lageraufnahme 25 ein relativ großes Spiel ist, kann der Kupplungsarm 15 verhältnismäßig frei zwischen der Gebrauchsstellung G und der Nichtgebrauchsstellung N verstellt werden. Allerdings ist eine Führung zweckmäßig, beispielsweise um Beschädigungen des Stoßfängers 24 bei dieser Stellbewegung zu vermeiden. Diese Führung ist bei der Anhängekupplung wie folgt realisiert:

An der Stirnseite 35 ist die Führungsfläche 36 vorgesehen, die an einer Führungskontur 73 an der Lageraufnahme 25 geführt ist. Die Führungskontur 73 umfasst einen Führungsbolzen 74, der im Bereich des Aufnahmeraums 45 der Lageraufnahme 25 angeordnet ist. Beispielsweise erstreckt sich der Führungsbolzen 74 zwischen den Umfangswänden 44 etwa diagonal. Die jeweiligen Längsenden des Führungsbolzens 74 könnten zwar fest mit dem Gehäuse beziehungsweise dem Lagerteil 14 verbunden sein, sind vorliegend jedoch drehbar gelagert. Beispielsweise ist eine am Führungsbolzen drehbar gelagerte Hülse oder sind Lagerbuchsen 75 vorgesehen, die einerseits in korrespondierende Aufnahmen an der Umfangswand 44 eingreifen, andererseits Aufnahmen für den Lagerbolzen 74 haben. Mithin ist also der Führungsbolzen 74 bezüglich der Lageraufnahme 25 drehbar gelagert.

Wenn nunmehr das Lagerelement 26 gedreht wird, rollt der Führungsbolzen 74, mithin also die Führungskontur 73, auf der Führungsfläche 36 ab. Die Führungsfläche 36 ist als eine sogenannte Regelfläche ausgestaltet, das heißt als eine durch eine Gerade aufgespannte Fläche.

An dieser Stelle sei bemerkt, dass selbstverständlich auch Führungsflächen mit unterschiedlichen Konturen vorgesehen sein können. Weiterhin ist es nicht notwendig, einen durchgehenden Führungsbolzen zu verwenden, sondern es könnten beispielsweise auch Kulissenvorsprünge oder dergleichen andere Führungskonturen vorgesehen sein, die auf einer an sich beliebig ausgestalteten Führungsfläche entlanggleiten. Weiterhin ist auch eine kinematische Umkehr möglich, das heißt, dass beispielsweise ein Führungsvorsprung am Lagerkopf (entsprechend dem Lagerkopf 32) an einer entsprechenden Führungsfläche an der Innenseite der Lageraufnahme entlanggleitet.

An der der Führungskontur 73 und der Führungsfläche 36 entgegengesetzten Seite ist die Führung des Kupplungsarm-Lagerteils 14 bezüglich des Fahrzeug-Lagerteils 13 mittels der Führungswand 48 realisiert, an der beispielsweise die Schrägfläche 39 entlanggleiten kann. Aber auch weiter beabstandet dazu, nämlich im Bereich des Bundes 44, ist eine Führung realisiert, da dieser nämlich stets an der Innenseite der Durchtrittsöffnung 49 entlanggeführt ist, so dass die Bewegung des Kupplungsarm-Lagerteils 14 bezüglich des Fahrzeug-Lagerteils 13 stets gewährleistet ist.

Dabei ist allerdings zu bemerken, dass stets ein gewisses Bewegungsspiel zwischen den beiden Komponenten Fahrzeug-Lagerteil 13 und Kupplungsarm-Lagerteil 14 vorteilhaft ist, so dass ein Verklemmen der beiden Bauteile aneinander bei dem Verstellen zwischen den beiden Stellungen N und G effektiv vermieden wird. Unter anderem ermöglicht diese relativ freie Konfiguration, das heißt eine Konfiguration, bei der nicht stets alle Lagerflächen der beiden Lagerkomponenten unmittelbar miteinander in Kontakt sind, dass nicht nur eine mehrachsige Schwenkbarkeit gegeben ist, sondern auch eine axiale Verstellbarkeit des Kupplungsarm-Lagerteils 14 relativ zum Fahrzeug-Lagerteil 13:

An der Stirnseite 35 des Lagerkopfes 32 ist eine Gegen-Formschlusskontur 76 vorgesehen, beispielsweise eine Art Nut, in die der Führungsbolzen 74 in der Gebrauchsstellung G und der Nichtgebrauchsstellung N eintauchen kann. Es versteht sich, dass bei einer Drehbarkeit des Lagerteils 14 zum Lagerteil 13 um andere Winkel als 180° selbstverständlich auch weitere Gegen-Formschlusskonturen vorgesehen sein können, so dass beliebige Winkelstellungen der beiden Komponenten relativ zueinander realisierbar sind. Zum Entriegeln wird also das Kupplungsarm-Lagerteil 14 in Richtung eines Pfeils 77 vom Fahrzeug-Lagerteil 13 zunächst axial wegbewegt, so dass der eine Formschlusskontur bildende Führungsbolzen 74 aus der Gegen-Formschlusskontur 76 ausrücken kann, mithin also der Formschluss zwischen den beiden Bauteilen aufgehoben ist. Somit ist also die vorher vorhandene Verdrehsicherung des Lagerteils 14 relativ zum Lagerteil 13 aufgehoben. Dann ist die ein- oder mehrachsige Verdrehbarkeit (Pfeil 96) des Lagerteils 14 relativ zum Lagerteil 13 vorhanden. Es versteht sich dass auch mit sonstigen Führungskonturen, beispielsweise dornartigen Vorsprüngen und dergleichen, eine solche Verdrehsicherung realisierbar ist, bei der bei einer erfindungsgemäß ausgestalteten Anhängekupplung zum einen eine Führung des einen Bauteils am anderen Bauteil, zum andern auch die Herstellung eines Formschlusses möglich ist.

Die vorgenannte Abrückbewegung, das heißt das axiale Verstellen der Lagerteile 13, 14 relativ zueinander, wird durch eine Stellfederanordnung 78 optimal unterstützt. Die Stellfederanordnung 78 sorgt also dafür, dass die Lagerteile 13, 14 relativ zueinander beweglich werden können, ohne dass ein Bediener wesentlich dazu beiträgt. Es genügt, mittels der Betätigungseinrichtung 71, die manuell oder motorisch betätigbar sein kann, die Fixiereinrichtung 51 zu lösen, wobei die dann folgende Entriegelung, zum einen unterstützt durch die Lösefedern 69, zum andern aber wesentlich auch unterstützt durch die Stellfederanordnung 78, einsetzt.

Es ist noch nachzutragen, dass selbstverständlich eine erfindungsgemäße Anhängekupplung auch motorisiert sein kann. Beispielsweise könnte das Lagerteil 14 mittels eines Reibantriebs, eines Seilzugantriebs oder dergleichen angetrieben werden, um beispielsweise von der Nichtgebrauchsstellung N in die Gebrauchsstellung G und/oder umgekehrt bewegt zu werden.

Beispielsweise sind am Lagerteil 14 zwei Trume 101 und 102 eines Seilzuges 100 befestigt Die Trume 101 und 102 können mit einem oder zwei manuellen oder motorischen Antrieben, z.B. einen elektrischen Motor 103, jeweils verbunden sein und gezogen werden. An dieser Stelle sei bemerkt, dass es dabei auf das Fixierkonzept der Anhängekupplung 10 nicht ankommt, wobei dieses Fixierkonzept jedoch vorteilhaft ist.

Die Stellfederanordnung 78 umfasst eine Torsionsfeder 79, die ein Verdrehen des Lagerteils 14 relativ zum Lagerteil 13 bewirkt. Dies trägt unter anderem dazu bei, dass ausgehend von der Gebrauchs- oder Nichtgebrauchsstellung die Zwischenstellung beispielsweise gemäß Figur 1b erreicht wird. Zusätzlich ist es zweckmäßig, wenn die Gewichtskraft des Kupplungsarms 15 zu dieser Stellbewegung beiträgt.

Die Stellfederanordnung 78 ist drehfest sowohl mit dem Lagerteil 13 als auch mit dem Lagerteil 14 verbunden. Beispielsweise greift der Stützvorsprung 81 in eine Aufnahme 82 an der Stirnseite 85 des Lagerkopfes 32 ein. Die Aufnahme 82 ist beispielsweise eine Sack-Aufnahme, in der der Stützvorsprung 81 zwar drehbeweglich, jedoch ansonsten im Wesentlichen formschlüssig aufgenommen ist.

Die Drehfestlegung am Kupplungsarm-Lagerteil 14 hingegen wird durch Stützabschnitte 80 realisiert. Dabei ist vorteilhaft vorgesehen, dass sich die Stellfederanordnung 78 mit einem gewissen Spiel an dem Kupplungsarm-Lagerteil 14 abstützt, so dass eine gute Beweglichkeit erzielt ist. Bevorzugt bilden die Stützabschnitte 80 Ausnehmungen 83 aus, in denen eine Kontur des Kupplungsarm-Lagerteils 14 aufgenommen ist. Bei dieser handelt es sich vorzugsweise um den Führungsbolzen 74. Die beiden Ausnehmungen 83 haben beispielsweise eine U-förmige oder V-förmige Gestalt. Die Innenseiten der Stützabschnitte 80, die die Innenseiten der Aufnahmen 83 bilden, sind vorzugsweise schräg verlaufend, so dass der Führungsbolzen 74 an diesen schräg verlaufenden, Gleitflächen 84 bildenden Bereichen entlanggleiten kann. Dies unterstützt die Ausrückbewegung (Pfeil 77).

Die Stellfederanordnung 78 umfasst also eine insgesamt vorteilhaft einstückige Stellfeder 85, die mehrere Abschnitte hat, nämlich beispielsweise die Torsionsfeder 79, die man auch als Torsionsfederabschnitt auffassen kann, den Stützvorsprung 81 sowie die Stützabschnitte 80. Die Stützabschnitte 80 sind durch einen oder mehrere Zwischenabschnitte 86 miteinander verbunden, so dass eine hohe Stabilität gegeben ist. Vorzugsweise ist vorgesehen, dass sich ein freies Ende 87 der Stellfeder 85 an einer dem Führungsbolzen 74 zugewandten Innenseite eines Zwischenabschnittes 86 abstützt, so dass ein Aufspreizen der Aufnahmen 83 bei Belastung effektiv verhindert wird.

Die Handhabung der Fixiereinrichtung 51 wird durch eine Auslösesperre 88 erleichtert, die das Stellelement 52 in seiner Lösestellung hält, solange nicht die Gebrauchsstellung G oder die Nichtgebrauchsstellung N erreicht ist. Die Auslösesperre 88 umfasst ein Sperrelement 89, das in einem Kanal 90 des Stellelements 52 quer zu dessen Längsverstellachse, vorliegend also der Längsachse 43, beweglich gelagert ist. Das Sperrelement 89 wird durch eine Feder 91, die sich einerseits am Stellelement 52, beispielsweise dem Boden des Kanals 90, andererseits am Sperrelement 89 abstützt, in seine Sperrstellung beaufschlagt. In dieser Sperrstellung greift das Sperrelement 89 in einen Sperrkanal 92 am in das Stellelement führenden Körper, vorliegend das Lagerteil 13, ein. In dem Sperrkanal 92 ist ein Auslöseelement 93, beispielsweise ein Schieber, eine Kugelanordnung oder dergleichen, in Längsrichtung des Sperrkanals 92 beweglich gelagert. Wenn das Auslöseelement 93 ausweichen kann, das heißt aus der vom Stellelement-Führungskanal 57 abgewandten Seite des Sperrkanals 92 vorstehen kann, kann das Sperrelement 89 in den Sperrkanal 92 eindringen und stützt sich dann in diesem ab, so dass das Stellelement 52 seine Axialposition beibehält. An dem relativ zum Sperrkanal 92 beweglichen Bauteil, vorliegend dem Lagerteil 14, sind der Gebrauchsstellung G und der Nichtgebrauchsstellung N zugeordnete Auslösekonturen 94 vorgesehen. Wenn das Lagerteil 14 so bewegt ist, dass die Auslösekonturen 94 dem Auslöseelement 93 gegenüberliegen und somit das Auslöseelement 93 in den Sperrkanal 92 hineinverdrängen, verdrängt dieses seinerseits wiederum das Sperrelement 89 aus dem Sperrkanal 92 heraus, so dass das Stellelement 52 freikommt und den Formschluss der Fixiereinrichtung 51 herstellt.

In der Fixierstellung der Fixiereinrichtung 51 sind die Formschlussflächen 54, 55 sowie die Formschlusskontur 76 und der Führungsbolzen 74 in Formschlusskontakt. Ansonsten sind die Lagerteile 13, 14 vorteilhaft nicht in Kontakt, so dass die Lagerflächen zumindest in der Gebrauchsstellung G keinen Verschleiß erfahren.

Eine in Figur 3a angedeutete Ausführungsform für eine erfin-dungsgemäß funktionierende Stellfederanordnung ist lediglich durch einen Pfeil 95 angedeutet. So könnte beispielsweise die Formschluss-Lösefeder 69 entlang des Pfeils 95 schräg orientiert sein beziehungsweise zumindest deren vordere, auf das Formschlusselement 53 wirkende Fläche, so dass das Formschlusselement 53 durch die Lösefeder 69 eine Kraft nicht nur in Richtung eines Lösens der Fixierung erfährt, sondern zugleich die Lösefeder 69 das Lagerelement 14 quasi vom Lagerteil 13 abstößt. Auch dies kann zu einem Stellen in eine Zwischenstellung zwischen der Gebrauchsstellung G-und der Nichtgebrauchsstellung N vorteilhaft beitragen.

## Patentansprüche

1. Anhängekupplung für ein Kraftfahrzeug (11), mit einem Lager (12), das ein fahrzeugfest anordenbares Fahrzeug-Lagerteil (13) und ein an dem Fahrzeug-Lagerteil (13) zwischen einer Gebrauchsstellung und einer Nichtgebrauchsstellung beweglich gelagertes Kupplungsarm-Lagerteil umfasst, an dem ein Kupplungsarm angeordnet ist, an dessen freiem Ende ein Kupplungselement (17) zum Ankuppeln eines Anhängers angeordnet ist, das im am Kraftfahrzeug (11) montierten Zustand in der Gebrauchsstellung nach hinten vor das Kraftfahrzeug (11) vorsteht und in der Nichtgebrauchsstellung zu dem Kraftfahrzeug (11) hinbewegt ist, insbesondere hinter einem Stoßfänger (24) des Kraftfahrzeugs (11) angeordnet ist, wobei das Lager (12) eine Lageraufnahme (25) und ein an der Lageraufnahme (25) beweglich gelagertes Lagerelement (26) umfasst, und wobei die Anhängekupplung eine Fixiereinrichtung (51) zum Fixieren des Kupplungsarms in der Gebrauchsstellung und/oder der Nichtgebrauchsstellung aufweist, wobei die Fixiereinrichtung (51) mindestens ein Paar von Formschlussflächen (54, 55) aufweist, die zwischen einer Lösestellung, in der die Formschlussflächen (54, 55) voneinander entfernt sind, und einer Fixierstellung der Fixiereinrichtung (51) verstellbar sind, in der die Formschlussflächen (54, 55) formschlüssig aneinander anliegen, wobei das Lager (12) eine die Lageraufnahme (25) und das Lagerelement (26) relativ zueinander in Richtung einer vorbestimmten Stellung beaufschlagende Stellfederanordnung (78) aufweist, **dadurch gekennzeichnet, dass** die Stellfederanordnung (78) mindestens eine einer der Formschlussflächen (54, 55) zugeordnete Formschluss-Lösefeder (69) umfasst, die die andere Formschlussfläche (54, 55) im Sinne eines Lösens des Formschlusses beaufschlagt, wobei die Formschluss-Lösefeder (69) beim Lösen des Formschlusses eine Relativbewegung des Lagerelementes (26) und der Lageraufnahme (25) einleitet.

2. Anhängekupplung nach Anspruch 1, **dadurch gekennzeichnet, dass** die Stellfederanordnung (78) mindestens eine in einem Innenraum (33) der Lageraufnahme (25) angeordnete Stellfeder umfasst.

3. Anhängekupplung nach Anspruch 1 oder 2, **dadurch gekennzeichnet, dass** die mindestens eine Stellfeder mindestens eine Gleitfläche (84) aufweist, an der eine Führungskontur (73) am Lagerelement (26) oder der Lageraufnahme (25) bei einem Verstellen in die vorbestimmte oder aus der vorbestimmten Stellung entlang gleiten kann.

4. Anhängekupplung nach einem der vorhergehenden Ansprüche, **dadurch gekennzeichnet, dass** die Formschluss-Lösefeder (69) die Formschlussflächen (54, 55) winkelig zu einer Stellachse beaufschlagt, in der mindestens eine der Formschlussflächen (54, 55) zur Herstellung des Formschlusses insbesondere durch ein Stellelement (52) der Fixiereinrichtung (51) beaufschlagbar sind

5. Anhängekupplung nach einem der vorhergehenden Ansprüche, **dadurch gekennzeichnet, dass** die vorbestimmte Stellung eine zwischen der Gebrauchsstellung und der Nichtgebrauchsstellung liegende Zwischenstellung ist, in der der Kupplungsarm von einem Bediener ergriffen werden kann.

6. Anhängekupplung nach einem der vorhergehenden Ansprüche, **dadurch gekennzeichnet, dass** die eine Formschlussfläche (55) an der Lageraufnahme (25) und die andere Formschlussfläche (54) an dem Lagerelement (26) fest oder beweglich angeordnet sind und die vorbestimmte Stellung die Lösestellung der Fixiereinrichtung (51) ist, in der das mindestens eine Paar zusammenwirkender Formschlussflächen (54, 55) der Fixiereinrichtung (51) voneinander gelöst und entfernt sind.

7. Anhängekupplung nach einem der vorhergehenden Ansprüche, **dadurch gekennzeichnet, dass** das Lagerelement (26) einen Lagerkopf (32) umfasst, der in einem Innenraum (33) der Lageraufnahme (25) entlang mindestens einer Schiebeachse schiebebeweglich und um mindestens eine Drehachse drehbeweglich gelagert ist.

8. Anhängekupplung nach Anspruch 7, **dadurch gekennzeichnet, dass** an dem Lagerkopf (32) oder der Lageraufnahme (25) mindestens eine insbesondere stangenartige Führungskontur (73) angeordnet ist, die an einer Führungsfläche des jeweils anderen Bauteils anliegt und den Lagerkopf (32) und die Lageraufnahme (25) bei einer Relativbewegung führt und/oder dass der Lagerkopf (32) und die Lageraufnahme (25) relativ zueinander durch eine Schiebebewegung zwischen einer Lösestellung und einer Fixierstellung der Fixiereinrichtung (51) verstellbar gelagert sind, wobei in der Lösestellung Formschlusskonturen am Lagerkopf (32) und der Lageraufnahme (25) voneinander entfernt sind und der Lagerkopf (32) und die Lageraufnahme (25) um mindestens eine Drehachse, insbesondere mehrachsig, relativ zueinander drehbar sind.

9. Anhängekupplung nach Anspruch 8, **dadurch gekennzeichnet, dass** sich die Stellfederanordnung (78) an der mindestens einen Führungskontur (73) abstützt und/oder die mindestens eine Führungskontur (73) eine Formschlusskontur bildet, die durch eine Relativbewegung des Lagerkopfs (32) und der Lageraufnahme (25) mit einer Gegen-Formschlusskontur (76) am jeweils anderen Bauteil in oder außer Formschluss-Eingriff bringbar ist.

10. Anhängekupplung nach einem der Ansprüche 7 bis 9, **dadurch gekennzeichnet, dass** ein vom Lagerkopf (32) abstehender Vorsprung eine Durchtrittsöffnung (49) der Lageraufnahme (25) durchdringt und vor die Lageraufnahme (25) vorsteht, und dass die mindestens eine insbesondere an einem Innenumfang der Durchtrittsöffnung (49) angeordnete Führungskontur (73) eine Führungsfläche zur Führung des Vorsprungs an der Durchtrittsöffnung umfasst.

11. Anhängekupplung nach einem der vorhergehenden Ansprüche, **dadurch gekennzeichnet, dass** die Fixiereinrichtung (51) ein Stellelement (52), insbesondere einen axial verschieblich gelagerten Bolzen, umfasst, das in der Fixierstellung der Fixiereinrichtung (51) mindestens ein eine der Formschlussflächen (54, 55) aufweisendes Formschlusselement (53) in Richtung der anderen Formschlussfläche (54, 55) beaufschlagt, wobei das mindestens eine Formschlusselement (53) und das Stellelement (52) an der Lageraufnahme (25) oder dem Lagerelement (26) beweglich gelagert sind.

12. Anhängekupplung nach einem der vorhergehenden Ansprüche, **dadurch gekennzeichnet, dass** die Fixiereinrichtung (51) zwischen dem Stellelement (52) und dem mindestens einen Formschlusselement (53) mindestens ein Ausgleichselement (62) angeordnet ist, wobei das mindestens eine Formschlusselement (53) das mindestens eine Ausgleichselement (62) in einem Führungskanal (61) entlang einer Längsachse des Führungskanals (61) geführt sind, und wobei das mindestens eine Ausgleichselement'(62) quer zu der Längsachse und/oder entlang der Längsachse elastisch verformbar ist.

13. Anhängekupplung nach Anspruch 12, **dadurch gekennzeichnet, dass** das Ausgleichselement (62) an seinen Stirnseiten bezüglich der Längsachse jeweils eine insbesondere kalottenartige oder konische Aufnahme (63, 64) aufweist, wobei in der einen Aufnahme (63) das mindestens eine Formschlusselement (53) und in der anderen Aufnahme (64) das Stellelement (52) oder ein zwischen dem Ausgleichselement (62) und dem Stellelement (52) angeordneter, insbesondere nicht-elastischer, Zwischenkörper (60) aufgenommen ist, und/oder dass das Ausgleichselement (62), insbesondere zwischen den Aufnahmen (63, 64), eine Durchtrittsöffnung (66) aufweist, durch die das Stellelement (52) oder der Zwischenkörper (60) das mindestens eine Formschlusselement (53) direkt beaufschlagen und/oder dass das Ausgleichselement (62) mindestens zwei Ringsegmente (67) aufweist, die durch einen Federring (68) an ihrem radialen Außenumfang federnd gehalten sind, .

14. Anhängekupplung nach einem der vorhergehenden Ansprüche, **dadurch gekennzeichnet, dass** das Lager (12) kein Kugellager oder kein ausschließlich im Sinne eines Kugellagers lagerndes Lager (12) ist.

15. Anhängekupplung nach einem der vorhergehenden Ansprüche, **dadurch gekennzeichnet, dass** sie zum Antreiben des Kupplungsarm-Lagerteils (14), insbesondere zwischen der Gebrauchsstellung und der Nichtgebrauchsstellung, einen Reibradantrieb und/oder einen Antrieb mit einem flexiblen Zugorgan (100), insbesondere einen Seilzugantrieb, aufweist, wobei das Kupplungsarm-Lagerteil (14) mit dem mindestens einen Zugorgan (100) verbunden ist und um eine Drehachse (D1) drehbar und längs und/oder quer zu der Drehachse (D1) beweglich, insbesondere schwenkbar, ist.

## Claims

1. Trailer coupling for a motor vehicle (11), with a bearing (12) which includes a vehicle bearing part (13) which may be fitted fixed to the vehicle, and a coupling arm bearing part movably mounted on the vehicle bearing part (13) between a position of use and an inoperative position, and on which is mounted a coupling arm which has at its free end a coupling element (17) for coupling a trailer and which, when fitted to the motor vehicle (11), extends backwards beyond the motor vehicle (11) in the position of use and in the inoperative position is moved towards the motor vehicle (11), in particular being located behind a bumper (24) of the motor vehicle (11), wherein the bearing (12) includes a bearing location (25) and a bearing element (26) mounted movably on the bearing location (25), and wherein the trailer coupling has a fixing device (51) for fixing the coupling arm in the position of use and/or the inoperative position, wherein the fixing device (51) has at least one pair of interlocking faces (54, 55) which are adjustable between a release position in which the interlocking faces (54, 55) are removed from one another and a fixing position of the fixing device (51) in which the interlocking faces (54, 55) fit positively against one another, wherein the bearing (12) has an adjusting spring assembly (78) which biases the bearing location (25) and the bearing element (26) towards a predetermined position relative to one another, **characterised in that** the adjusting spring assembly (78) includes at least one interlocking release spring (69) assigned to one of the interlocking faces (54, 55) and acting on the other interlocking face (54, 55) for the purpose of releasing the interlocking, wherein the interlocking release spring (69) in releasing the interlocking initiates a relative movement of the bearing element (26) and the bearing location (25).

2. Trailer coupling according to claim 1, **characterised in that** the adjusting spring assembly (78) includes at least one adjusting spring located in an interior (33) of the bearing location (25).

3. Trailer coupling according to claim 1 or 2, **characterised in that** the adjusting spring or springs has or have at least one sliding surface (84) along which a guide contour (73) on the bearing element (26) or the bearing location (25) is able to slide during adjustment into or out of the predetermined position.

4. Trailer coupling according to any of the preceding claims, **characterised in that** the interlocking release spring (69) acts upon the interlocking faces (54, 55) at an angle to an adjusting axis in which at least one of the interlocking faces (54, 55) may be acted upon to create the interlocking, in particular by an adjusting element (52) of the fixing device (51).

5. Trailer coupling according to any of the preceding claims, **characterised in that** the predetermined position is an intermediate position between the position of use and the inoperative position, in which the coupling arm may be grasped by an operator.

6. Trailer coupling according to any of the preceding claims, **characterised in that** the one interlocking face (55) is mounted fixed or movably on the bearing location (25) and the other interlocking face (54) is mounted fixed or movably on the bearing element (26), and the predetermined position is the release position of the fixing device (51) in which the pair or pairs of interacting interlocking faces (54, 55) of the fixing device (51) are released and removed from one another.

7. Trailer coupling according to any of the preceding claims, **characterised in that** the bearing element (26) includes a bearing head (32) which is mounted in an interior (33) of the bearing location (25), with the ability to slide along at least one sliding axis and to rotate around at least one axis of rotation.

8. Trailer coupling according to claim 7, **characterised in that** there is provided on the bearing head (32) or the bearing location (25) at least one guide contour (73), in particular rod-like, which is in contact with a guide surface of the respective other component, and guides the bearing head (32) and the bearing location (25) in the course of a relative movement and/or that the bearing head (32) and the bearing location (25) are mounted so as to be adjustable relative to one another through a sliding movement between a release position and a fixing position of the fixing device (51), wherein in the release position interlocking contours on the bearing head (32) and the bearing location (25) are removed from one another, and the bearing head (32) and the bearing location (25) are rotatable relative to one another around at least one axis of rotation, in particular several axes.

9. Trailer coupling according to claim 8, **characterised in that** the adjusting spring assembly (78) rests on the guide contour or contours (73) and/or the guide contour or contours (73) form an interlocking contour which may be brought into or out of interlocking engagement by means of a relative movement of the bearing head (32) and the bearing location (25) with a mating interlocking contour (76) on the respective other component.

10. Trailer coupling according to any of claims 7 to 9, **characterised in that** a projection protruding from the bearing head (32) penetrates a through opening (49) of the bearing location (25) and extends beyond the bearing location (25), and that guide contour or contours (73), provided in particular on an inner periphery of the through opening (49), include a guide surface to guide the projection at the through opening.

11. Trailer coupling according to any of the preceding claims, **characterised in that** the fixing device (51) includes an adjusting element (52), in particular a pin mounted with axial sliding capability, which in the fixing position of the fixing device (51) biases an interlocking element (53) with one of the interlocking faces (54, 55) in the direction of the other interlocking face (54, 55), wherein the interlocking element or elements (53) and the adjusting element (52) are movably mounted on the bearing location (25) or the bearing element (26).

12. Trailer coupling according to any of the preceding claims, **characterised in that** in the fixing device (51) at least one compensating element (62) is located between the adjusting element (52) and the interlocking element or elements (53), wherein the interlocking element or elements (53) and the compensating element or elements (62) are guided in a guide channel (61) along a longitudinal axis of the guide channel (61), and wherein the compensating element or elements (62) is or are elastically deformable transversely to the longitudinal axis and/or along the longitudinal axis.

13. Trailer coupling according to claim 12, **characterised in that** the compensating element (62) has on each of its end faces with reference to the longitudinal axis a location (63, 64), in particular dome-shaped or conical, wherein there is held in the one location (63) the interlocking element or elements (53) and in the other location (64) the adjusting element (52) or an intermediate body (60), in particular non-elastic, mounted between the compensating element (62) and the adjusting element (52), and/or that the compensating element (62) has a through opening (66), in particular between the locations (63, 64), through which the adjusting element (52) or the intermediate body (60) act directly upon the interlocking element or elements (53) and/or that the compensating element (62) has at least two annular segments (67) which are held by a snap ring (68) with spring force on their radial outer periphery.

14. Trailer coupling according to any of the preceding claims, **characterised in that** the bearing (12) is not a ball bearing, or not a bearing (12) giving support solely in the manner of a ball bearing.

15. Trailer coupling according to any of the preceding claims, **characterised in that** it has for driving the coupling arm bearing part (14), in particular between the position of use and the inoperative position, a friction wheel drive and/or a drive with a flexible towing organ (100), in particular a cable drive, wherein the coupling arm bearing part (14) is connected to the towing organ or organs (100) and is rotatable around an axis of rotation (D1) and movable, in particular pivotable, along and/or transversely to the axis of rotation (D1).

## Revendications

1. Attelage de remorque destiné à un véhicule automobile (11), comprenant un palier (12), qui comprend une partie de palier de véhicule (13) pouvant être disposée de manière solidaire au véhicule et une partie de palier de bras d'attelage montée, au niveau de la partie de palier de véhicule (13), de manière mobile entre une position d'utilisation et une position de non-utilisation, au niveau de laquelle un bras d'attelage est disposé, au niveau de l'extrémité libre duquel un élément d'attelage (17) servant à l'attelage d'une remorque est disposé, lequel fait saillie, dans l'état monté au niveau du véhicule automobile (11), dans la position d'utilisation, du véhicule automobile (11) vers l'arrière et est déplacé en direction du véhicule automobile (11) dans la position de non-utilisation, en particulier derrière un pare-chocs (24) du véhicule automobile (11), sachant que le palier (12) comprend un logement de palier (25) et un élément de palier (26) monté de manière mobile au niveau du logement de palier (25), et sachant que l'attelage de remorque présente un dispositif de fixation (51) servant à fixer le bras d'attelage dans la position d'utilisation et/ou dans la position de non-utilisation, sachant que le dispositif de fixation (51) présente au moins une paire de surfaces à complémentarité de forme (54, 55) qui peuvent être ajustées entre une position de séparation, dans laquelle les surfaces à complémentarité de forme (54, 55) sont éloignées l'une de l'autre, et une position de fixation du dispositif de fixation (51), dans laquelle les surfaces à complémentarité de forme (54, 55) reposent l'une contre l'autre par complémentarité de forme, sachant que le palier (12) présente un ensemble de ressorts de réglage (78) soumettant à une contrainte le logement de palier (25) et l'élément de palier (26) l'un par rapport à l'autre en direction d'une position prédéfinie, **caractérisé en ce que** l'ensemble de ressorts de réglage (78) comprend au moins un ressort de séparation de la complémentarité de forme (69) associé à une des surfaces à complémentarité de forme (54, 55), lequel soumet à une contrainte l'autre surface à complémentarité de forme (54, 55) au sens d'une séparation de la complémentarité de forme, sachant que le ressort de séparation de la complémentarité de forme (69) initie, lors de la séparation de la complémentarité de forme, un déplacement relatif de l'élément de palier (26) et du logement de palier (25).

2. Attelage de remorque selon la revendication 1, **caractérisé en ce que** l'ensemble de ressorts de réglage (78) comprend au moins un ressort de réglage disposé dans un espace intérieur (33) du logement de palier (25).

3. Attelage de remorque selon la revendication 1 ou 2, **caractérisé en ce que** le ressort de réglage au moins au nombre de un présente au moins une surface de glissement (84), au niveau de laquelle un contour de guidage (73) peut glisser le long de l'élément de palier (26) ou du logement de palier (25) lors d'un ajustement dans la position prédéfinie ou hors de la position prédéfinie.

4. Attelage de remorque selon l'une quelconque des revendications précédentes, **caractérisé en ce que** le ressort de séparation de la complémentarité de forme (69) soumet à une contrainte les surfaces à complémentarité de forme (54, 55) à angle droit par rapport à un axe de réglage, dans lequel au moins une des surfaces à complémentarité de forme (54, 55) peut être soumise à une contrainte afin d'établir la complémentarité de forme en particulier par un élément de réglage (52) du dispositif de fixation (51).

5. Attelage de remorque selon l'une quelconque des revendications précédentes, **caractérisé en ce que** la position prédéfinie est une position intermédiaire se trouvant entre la position d'utilisation et la position de non-utilisation, dans laquelle le bras d'attelage peut être saisi par un utilisateur.

6. Attelage de remorque selon l'une quelconque des revendications précédentes, **caractérisé en ce que** l'une des surfaces à complémentarité de forme (55) est disposée de manière solidaire ou de manière mobile au niveau du logement de palier (25) et l'autre surface à complémentarité de forme (54) est disposée de manière solidaire ou mobile au niveau de l'élément de palier (26), et **en ce que** la position prédéfinie est la position de séparation du dispositif de fixation (51), dans laquelle les surfaces à complémentarité de forme (54, 55) en interaction de la paire au moins au nombre de une du dispositif de fixation (51) sont séparées et sont éloignées l'une de l'autre.

7. Attelage de remorque selon l'une quelconque des revendications précédentes, **caractérisé en ce que** l'élément de palier (26) comprend une tête de palier (32), qui est montée de manière à pouvoir être déplacée par coulissement dans un espace intérieur (33) du logement de palier (25) le long au moins d'un axe de coulissement et de manière à pouvoir être déplacée en rotation autour au moins d'un axe de rotation.

8. Attelage de remorque selon la revendication 7, **caractérisé en ce qu'**au moins un contour de guidage (73) en particulier de type barre est disposé au niveau de la tête de palier (32) ou du logement de palier (25), lequel repose au niveau d'une surface de guidage de l'autre composant respectivement et qui guide la tête de palier (32) et le logement de palier (25) lors d'un déplacement relatif, et/ou **en ce que** la tête de palier (32) et le logement de palier (25) sont montés de manière à pouvoir être ajustés par un déplacement par coulissement entre une position de séparation et une position de fixation du dispositif de fixation (51), sachant que, dans la position de séparation, des contours à complémentarité de forme au niveau de la tête de palier (32) et du logement de palier (25) sont éloignés les uns des autres et que la tête de palier (32) et le logement de palier (25) peuvent tourner de manière relative l'un par rapport à l'autre autour au moins d'un axe de rotation, en particulier sur plusieurs axes.

9. Attelage de remorque selon la revendication 8, **caractérisé en ce que** l'ensemble de ressorts de réglage (78) prend appui au niveau du contour de guidage (73) au moins au nombre de un, et/ou **en ce que** le contour de guidage (73) au moins au nombre de un forme un contour à complémentarité de forme, qui peut être amené en prise par complémentarité de forme ou qui peut être amené hors prise par complémentarité de forme avec un contour à complémentarité de forme complémentaire (76) au niveau de l'autre composant respectivement, par un déplacement relatif de la tête de palier (32) et du logement de palier (25).

10. Attelage de remorque selon l'une quelconque des revendications précédentes 7 à 9, **caractérisé en ce qu'**une partie faisant saillie de la tête de palier (32) traverse une ouverture de passage (49) du logement de palier (25) et fait saillie du logement de palier (25), et **en ce que** le contour de guidage (73) au moins au nombre de un disposé en particulier au niveau d'une périphérie intérieure de l'ouverture de passage (49) comprend une surface de guidage servant à guider la partie faisant saillie au niveau de l'ouverture de passage.

11. Attelage de remorque selon l'une quelconque des revendications précédentes, **caractérisé en ce que** le dispositif de fixation (51) comprend un élément de réglage (52), en particulier un boulon monté de manière à pouvoir coulisser de manière axiale, lequel soumet à une contrainte au moins un élément à complémentarité de forme (53) présentant l'une des surfaces à complémentarité de forme (54, 55) en direction de l'autre surface à complémentarité de forme (54, 55) dans la position de fixation du dispositif de fixation (51), sachant que l'élément à complémentarité de forme (53) au moins au nombre de un et l'élément de réglage (52) sont montés de manière mobile au niveau du logement de palier (25) ou de l'élément de palier (26).

12. Attelage de remorque selon l'une quelconque des revendications précédentes, **caractérisé en ce que** le dispositif de fixation (51) au moins un élément de compensation (62) est disposé entre l'élément de réglage (52) et l'élément à complémentarité de forme (53) au moins au nombre de un, sachant que l'élément à complémentarité de forme (53) au moins au nombre de un et l'élément de compensation (62) au moins au nombre de un sont guidés dans un canal de guidage (61) le long d'un axe longitudinal du canal de guidage (61), et sachant que l'élément de compensation (62) au moins au nombre de un peut être déformé élastiquement de manière transversale par rapport à l'axe longitudinal et/ou le long de l'axe longitudinal.

13. Attelage de remorque selon la revendication 12, **caractérisé en ce que** l'élément de compensation (62) présente, au niveau de ses côtés frontaux, par rapport à l'axe longitudinal, respectivement un logement (63, 64) en particulier de type calotte ou conique, sachant que l'élément à complémentarité de forme (53) au moins au nombre de un est logé dans un des logements (63) et que l'élément de réglage (52) ou un corps intermédiaire (60), en particulier non élastique, disposé entre l'élément de compensation (62) et l'élément de réglage (52) est logé dans l'autre logement (64), et/ou **en ce que** l'élément de compensation (62) présente une ouverture de passage (66) en particulier entre les logements (63, 64), par laquelle l'élément de réglage (52) ou le corps intermédiaire (60) soumet directement à une contrainte l'élément à complémentarité de forme (53) au moins au nombre de un, et/ou **en ce que** l'élément de compensation (62) présente au moins deux segments annulaires (67), qui sont maintenus sur ressorts par une bague à ressort (68) au niveau de la périphérie extérieure de cette dernière.

14. Attelage de remorque selon l'une quelconque des revendications précédentes, **caractérisé en ce que** le palier (12) n'est pas un palier à billes ou n'est pas un palier (12) de logement exclusivement au sens d'un palier à billes.

15. Attelage de remorque selon l'une quelconque des revendications précédentes, **caractérisé en ce qu'**il présente, aux fins de l'entraînement de la partie de palier de bras d'attelage (14), en particulier entre la position d'utilisation et la position de non-utilisation, un entraînement par roue à friction et/ou un entraînement pourvu d'un organe de traction (100) flexible, en particulier un entraînement à câble de traction, sachant que la partie de palier de bras d'attelage (14) est reliée à l'organe de traction (100) au moins au nombre de un et peut tourner autour d'un axe de rotation (D1) et est mobile, en particulier peut pivoter, en longueur et/ou de manière transversale par rapport à l'axe de rotation (D1).
